Europäisches Patentamt

European Patent Office

Office européen des brevets

(19)

(11) Numéro de publication: **0 219 405**
**A1**

(12) # DEMANDE DE BREVET EUROPEEN

(21) Numéro de dépôt: **86402099.5**

(22) Date de dépôt: **24.09.86**

(51) Int. Cl.⁴: **A 01 J 27/02**
**A 01 J 25/16, A 23 C 19/068**
**B 05 B 13/04, B 01 F 11/00**

(30) Priorité: **25.09.85 FR 8514215**

(43) Date de publication de la demande:
**22.04.87 Bulletin 87/17**

(84) Etats contractants désignés:
**AT BE CH DE FR GB IT LI LU NL SE**

(71) Demandeur: **NEWTEC INTERNATIONAL**
**Boulevard Lepic**
**F-73106 Aix-les-Bains(FR)**

(84) Etats contractants désignés:
**CH DE FR GB IT LI NL SE AT**

(71) Demandeur: **B. G.**

**F-52150 Illoud(FR)**

(84) Etats contractants désignés:
**AT BE CH DE FR GB IT LI LU NL SE**

(71) Demandeur: **LABORATOIRES ANIOS**
**111, rue Jean Jaurès**
**F-59420 Mouveaux(FR)**

(84) Etats contractants désignés:
**AT BE CH DE FR GB IT LI LU NL SE**

(72) Inventeur: **Grivel, Jacky**
**"Le Centre"**
**F-88530 Le Tholy(FR)**

(72) Inventeur: **Compagne, Yves**
**17, Raphaellaan**
**B-8420 De Haan(BE)**

(74) Mandataire: **Derambure, Christian**
**BUGNION ASSOCIES 116, Boulevard Haussmann**
**F-75008 Paris(FR)**

(54) **Procédé et machine pour déposer un produit solide finement divisé en suspension aqueuse sur des corps solides à traiter.**

(57) Procédé pour déposer un produit sur des corps à traiter caractérisé par le fait qu'on disperse dans une quantité de solution (5) la dose de produit de traitement (P) nécessaire à l'obtention de la concentration recherchée; puis, on stocke la quantité (QP) de suspension de produit de traitement (SP) ainsi réalisé dans une enceinte étanche (1); on mélange la suspension (SP au moins au début de la phase de soutirage au course de laquelle on dépose le produit de traitement (P) sur les corps (F) à traiter.

EP 0 219 405 A1

./...

FIG 1A

FIG 1B

FIG 1C

FIG.1

FIG 1D

FIG 1E

FIG 1F

PROCEDE ET MACHINE POUR DEPOSER UN PRODUIT SOLIDE FINEMENT DIVISE EN SUSPENSION AQUEUSE SUR DES CORPS SOLIDES A TRAITER

L'invention concerne un procédé et une machine pour déposer un produit solide finement divisé en suspension aqueuse - notamment des souches de flore fongique telles que du pénicillium - sur un ou des corps solides à traiter - notamment un produit alimentaire tel que du fromage ou de la charcuterie. L'invention concerne également le corps traité par ce procédé.

Le dépôt de souches de flore fongique - notamment de pénicillium - sur les fromages -notamment à pâte molle- pour leur affinage, est aujourd'hui généralement réalisé manuellement. A cet effet, les fromages provenant de la chaîne de fabrication sont rangés sur des claies organisées en piles ; on prépare un bidon d'une supension aqueuse de pénicillium, puis un opérateur remplit avec cette suspension et à partir du bidon le réservoir d'un pistolet de pulvérisation manuel ; enfin, l'opérateur pulvérise manuellement la suspension de pénicillium sur les fromages grâce au pistolet. Un tel pistolet de pulvérisation est décrit par exemple dans le brevet français 2.237.685. Ce procédé connu de pulvérisation manuelle pose cependant plusieurs problèmes : la maîtrise de la suspension de pénicillium, son dépôt sur les fromages, l'organisation et le coût de mise en oeuvre du procédé.

Le pénicillium doit être dosé avec précision dans la solution aqueuse compte tenu d'une part de la sensibilité et de l'importance de son action lors de l'affinage et d'autre part de son coût. La suspension aqueuse de pénicillium est évolutive dans le temps. Il est donc essentiel que la suspension de pénicillium soit préparée avec soin puis utilisée assez rapidement (par exemple dans la journée), mise à l'abri de toute contamination extérieure, et soutirée de façon homogène car le pénicillium solide se dépose rapidement et facilement.

l'abri de toute contamination exterieure, et soutirée de façon homogène car le pénicillium solide se dépose rapidement et facilement. Mais les transvasements successifs nécessaires de la suspension de pénicillium du bidon dans le réservoir du pistolet ne permettent pas de remplir ces exigences.

Le dépôt de pénicillium étant manuel, il présente d'évidents inconvénients d'irrégularité. De plus, le pistolet de pulvérisation est source de contamination et peut se boucher, le pénicillium formant une suspension dans la solution aqueuse. Cela impose de nombreux démontages, remontages, débouchages et nettoyages du pistolet. Généralement, l'opérateur pulvérise naturellement la suspension de pénicillium à faible distance des fromages, certaines zones des fromages peuvent être détériorés ou recevoir trop de pénicillium alors que d'autres n'en reçoivent pas ou insuffisamment.

Enfin, le procédé impose une organisation élaborée entraînant un coût appréciable, d'autant que le pénicillium doit être déposé dans des délais limités, par du personnel compétent, et que le réservoir du pistolet doit être fréquemment rempli, avec les temps d'arrêt inhérents.

On connaît également des procédés et machines pour le traitement du fromage après obtention de sa forme définitive. Dans le brevet français 2.542.570, on applique une couche de revêtement sur des fromages en les plongeant dans un réservoir rempli de la matière de revêtement. Dans le brevet français 2.486.818, on applique une suspension aqueuse de polymère sur des fromages grâce à des organes d'application sous la forme de bandes flexibles en caoutchouc. Dans le brevet français 2.195.395, on applique un enduit superficiel sur des fromages au moyen de brosses rotatives. Dans le brevet français 2.483.747, on sale mécaniquement des fromages en les faisant rouler sur une couche de sel. Dans le brevet français 2.254.941, on traite physiquement ou chimiquement des fromages au moyen de brosses planes et cylindriques. Toutefois, ces procédés et machines ne sont pas adaptés au cas particulier du pénicillium ou d'autres souches de flore fongique, compte tenu des problèmes posés.

On connaît enfin des appareils de pulvérisation pour différents usages. Dans le brevet français 2.444.502, l'appareil comprend deux rampes de pulvérisation portées par un chàssis mobile et reliées par un tuyau à une arrivée de liquide à pulvériser. Dans le brevet français 2.501.076, l'appareil comprend une réserve de liquide de traitement associée à un pulvérisateur. Toutefois, ces appareils de pulvérisation ne sont pas davantage adaptés au cas du pénicillium, compte tenu des problèmes posés.

L'invention vise donc à résoudre le problème du dépôt d'un produit solide finement divisé en suspension aqueuse -dit produit de traitement- sur un ou des corps solides à traiter et ceci de manière automatisée, contrôlée et efficace, la suspension aqueuse de produit de traitement étant en permanence à l'abri de toute contamination et étant homogène lors de chaque dépôt et pour les dépôts successifs.

Le produit de traitement est préférentiellement mais non exclusivement constitué de souches de flore fongique telles que le pénicillium. Les corps solides à traiter sont préférentiellement mais non exclusivement des produits alimentaires tels que du fromage -en particulier à pâte molle- ou de la charcuterie.

A cet effet, l'invention concerne un procédé dans lequel on disperse, dans une quantité déterminée de solution aqueuse S correspondant au traitement d'une certaine quantité également déterminée de corps F à traiter, la dose de souches de produit de traitement P nécessaire à l'obtention de la concentration recherchée car souhaitable ; on stocke la suspension aqueuse de produit de traitement SP dans une enceinte étanche ; on mélange la suspension SP dans l'enceinte étanche au moins au début du soutirage pour le dépôt de la suspension SP sur les corps à traiter F.

Une machine, selon l'invention, comprend des moyens de réception des corps à traiter F ; une enceinte étanche sous pression destinée à recevoir la suspension SP ; des moyens pour mélanger la suspension SP se trouvant dans l'enceinte étanche ; et des moyens pour disperser dans l'atmosphère et autour des corps F la suspension SP.

Du fait de sa mécanisation, l'invention permet une application bien maîtrisée et régulière de la suspension SP. Les corps F à traiter étant placés dans une atmosphère chargée en produit de traitement P grâce à la dispersion de la suspension SP, le dépôt du produit de traitement P sur les corps F à traiter est particulièrement efficace tant qualitativement que quantitativement. La suspension SP étant préparée pour une quantité déterminée de corps F à traiter, puis placée dans un récipient étanche, elle est donc à l'abri de toute contamination. Enfin le mélange, au moment de l'application sur les corps F à traiter, est tel que la suspension utilisée est homogène.

L'avantage du caractère stérile du procédé selon l'invention doit être souligné. Ce caractère stérile résulte de l'emploi d'une enceinte étanche et d'un circuit de distribution approprié. Ce caractère stérile est particulièrement important s'agissant du traitement de produits alimentaires.

Les autres caractéristiques de l'invention résulteront de la description qui suivra en référence aux dessins annexés dans lesquels : .

* les figures 1A à 1F sont six vues shématiques des différentes étapes du procédé selon l'invention ;

* la figure 2 est un diagramme montrant différentes variantes possibles des périodes de mélange de la suspension de produit de traitement SP par rapport aux périodes de dispersion de cette suspension SP dans l'atmosphère ;

* la figure 3 est un diagramme montrant différentes variantes possibles des périodes de dispersion dans l'atmosphère de la suspension de produit de traitement SP, par rapport aux périodes de réalisation de la quantité prédéterminée de cette suspension SP ;

* la figure 4 est une vue shématique de la dispersion de la suspension de produit de traitement SP dans l'atmosphère ;

* les figures 5A, 5B, 5C, 5D, 5E, 5F, 5G et 5H sont huit vues shématiques illustrant les étapes successives de la dispersion dans l'atmosphère ;

* la figure 6 est un diagramme montrant les séquences d'ouverture et de fermeture des moyens de dispersion et de marche et d'arrêt de la suspension de produit de traitement SP et du fluide vecteur A ;

la figure 7 est une vue shématique en perspective d'une machine correspondant à une forme de réalisation possible de l'invention. comportant un ensemble de dispersion et un ensemble de mélange :

* la figure 8 est une vue en élévation de l'ensemble de dispersion de la machine représentée sur la figure 7 ;

* la figure 8A est une variante de la figure 8 :

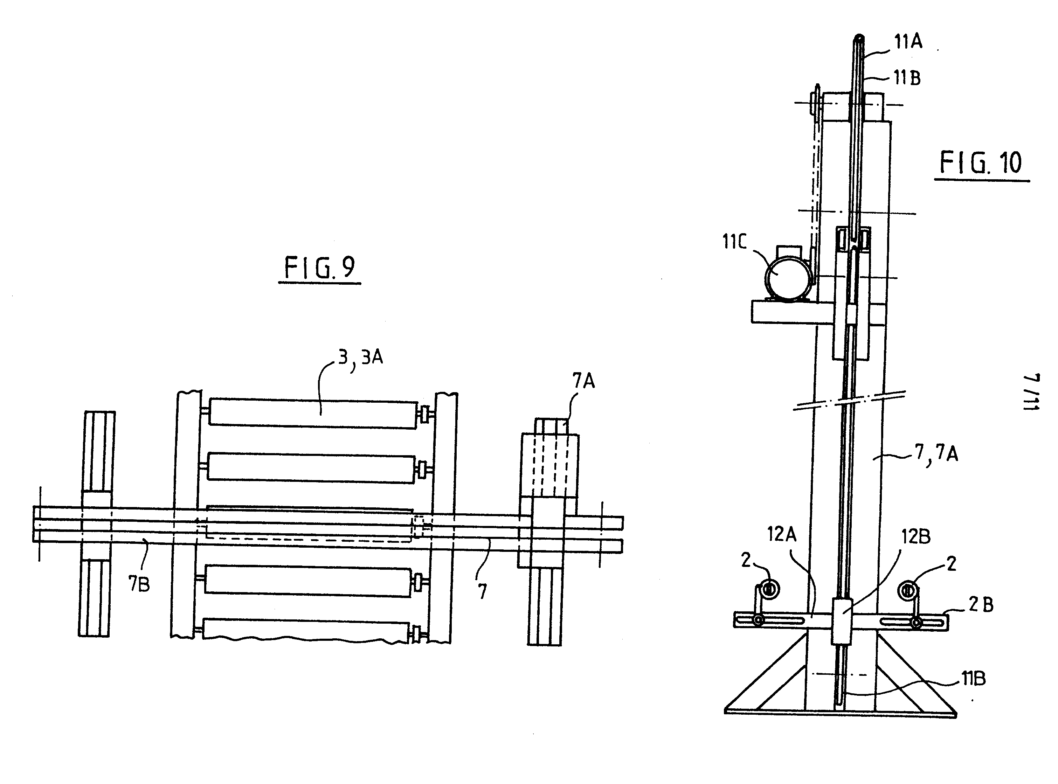

* la figure 9 est une vue de dessus de l'ensemble de dispersion de la figure 8 ;

* la figure 10 est une vue de côté de l'ensemble de dispersion de la figure 8 :

* la figure 11 est une vue en élévation de l'ensemble de mélange de la machine représentée sur la figure 7 ;

* la figure 12 est une vue de côté de l'ensemble de mélange de la figure 11 ;

* les figures 13A, 13B et 13C sont trois vues shématiques de côté de l'ensemble de mélange dans trois positions possibles :

* les figures 14A, 14B et 14C sont des vues shématiques en coupe axiale illustrant une forme de réalisation des moyens de dispersion de la machine. selon l'invention, dans trois états différents :

* la figure 15 est un shéma des circuits de fluides de la machine selon l'invention ;

* la figure 16 est une vue partielle en coupe axiale des moyens de dispersion de la machine selon l'invention :

* la figure 17 est un diagramme montrant les moyens de commande de la machine selon l'invention.

L'invention concerne un procédé et une machine de traitement de surface d'au moins un corps solide à traiter F, en particulier par dépôt d'un produit solide finement divisé en suspension aqueuse sur un ou des corps solides à traiter F. Le produit solide finement divisé constitue un

produit de traitement P. Préférentiellement, il s'agit de souches de flore fongique telles que le pénicillium. Les corps à traiter F sont préférentiellement des produits alimentaires tels que des fromages à pâte molle ou de la charcuterie.

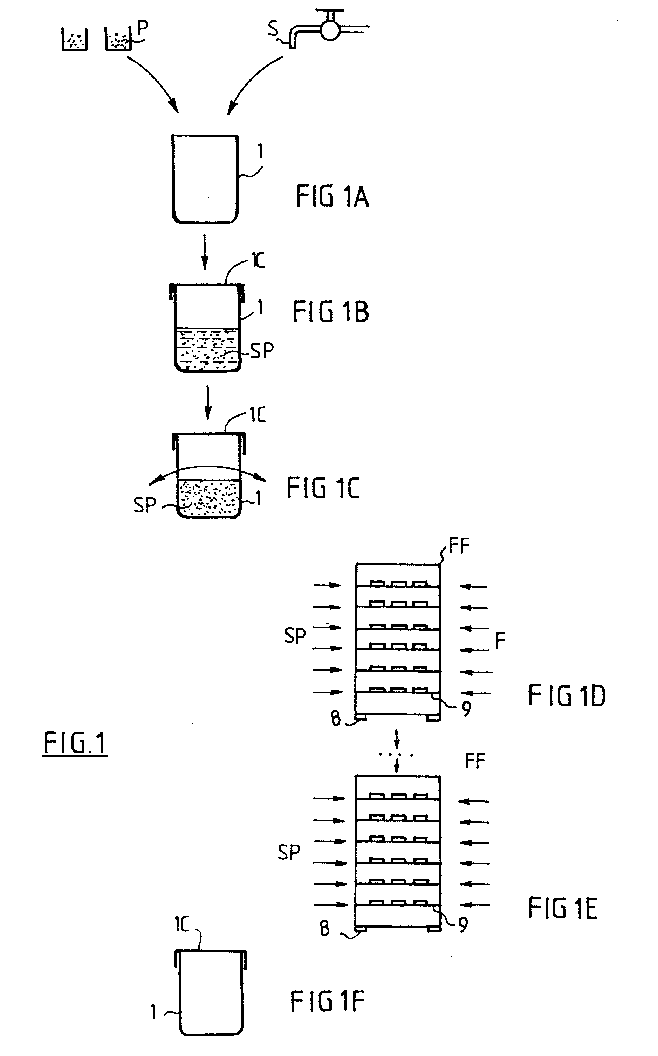

Dans le procédé, on disperse d'abord dans une quantité de solution aqueuse S appropriée au traitement d'une certaine quantité QF de corps à traiter F la dose de produit de traitement P nécessaire à l'obtention de la concentration recherchée (figure 1A) ; puis, on stocke la quantité QP ainsi réalisée (et à la concentration voulue) de suspension aqueuse de produit de traitement SP ainsi obtenue dans une enceinte étanche 1 (figure 1B) ; et on mélange cette suspension SP (figure 1C) au moins au début de la phase de soutirage au cours de laquelle on dépose le produit de traitement P sur les corps F à traiter (figure 1D). L'opération de dépôt du produit de traitement peut être répétée sur d'autres corps F à traiter (figure 1E), jusqu'à ce que la quantité initialement préparée de suspension SP ait été consommée, l'enceinte 1 étant alors vide (figure 1F).

Selon l'invention on utilise une enceinte 1 amovible, ce qui permet de réaliser la dispersion en dehors de la zone de production ou intervient le dépôt.

Dans le cas particulier ou le produit de traitement est du pénicillium et le corps F à traiter du fromage, on peut disperser de l'ordre de 800 doses de pénicillium dans 20 litres d'eau, ce qui permet de traiter entre 150 et 200 kilos de fromage. Préférentiellement, la quantité de suspension aqueuse de produit de traitement SP, initialement préparée QP, correspond à une journée ou une partie de journée de production des corps F à traiter. Elle est donc par exemple de l'ordre de 15 à 20 litres.

Selon l'invention, on dépose le produit de traitement P sur les corps F à traiter par dispersion dans l'atmosphère entourant ces corps et ceci notamment grâce à une projection de la suspension SP au moyen d'un fluide vecteur A tel que de l'air, à partir de moyens de projection 2.

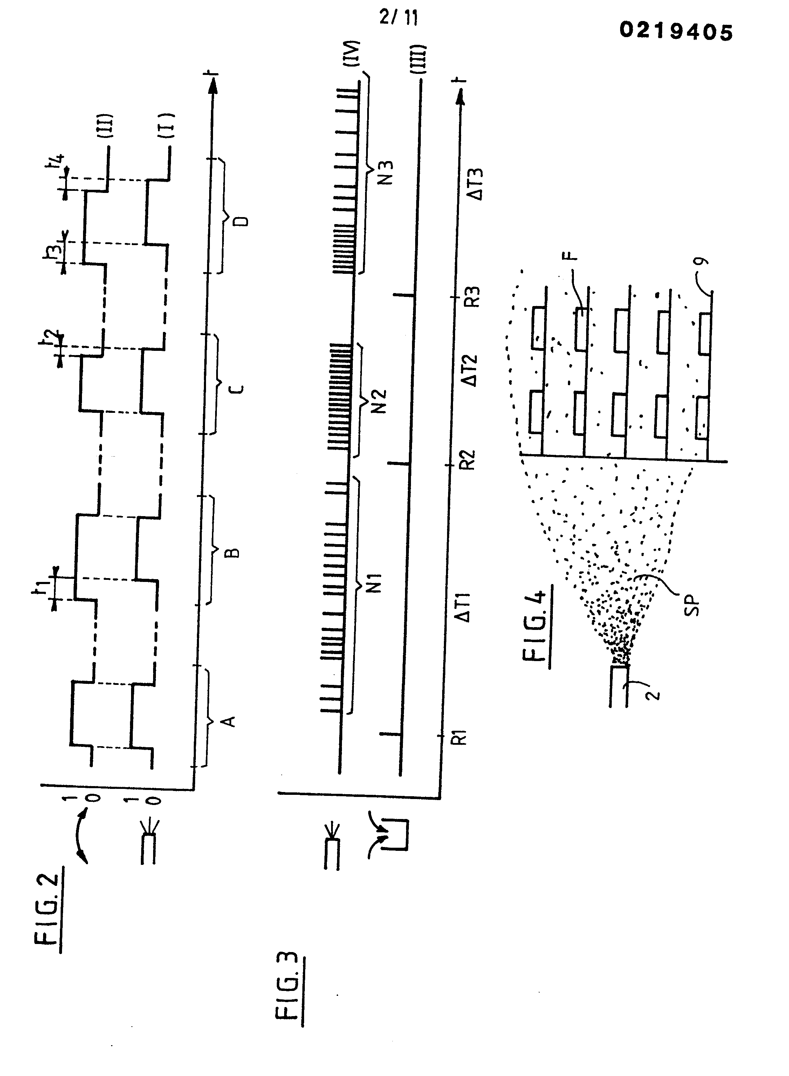

Sur la figure 2 sont représentés en abscisse le temps t et, en ordonnée, d'une part, la dispersion de suspension de produit de traitement SP (courbe I inférieure) et, d'autre part, le mélange de la suspension SP (courbe II supérieure). L'état 0 correspond à l'absence ou l'arrêt de la dispersion ou du mélange et l'état 1 à l'existence ou la marche de la dispersion ou du mélange. Dans une première variante, (cycle A), le mélange et la dispersion interviennent simultanément, c'est-à-dire commencent et finissent ensemble. Dans une deuxième variante (cycle B), le mélange commence avec un écart de temps t1 avant le début de la dispersion et finit en même temps que celle-ci. Dans une troisième variante (cycle C), le mélange et la dispersion commencent simultanément mais le mélange se termine avec un écart de temps t2 avant la fin de la dispersion. Enfin, dans une quatrième variante (cycle D), le mélange commence avec un écart de temps t3 avant le début de la dispersion et se termine avec un écart de temps t4 avant la fin de celle-ci. D'autres variantes sont possibles, bien que non préférentielles -notamment le début du mélange après le début de dispersion, la fin du mélange après la fin de la dispersion, enfin le mélange permanent-. Dans une variante préférentielle, le mélange commence au plus tard au commencement de la dispersion et finit au plus tôt à la fin de la dispersion.

Selon l'invention, on dépose le produit de traitement P sur les corps F à traiter en plusieurs étapes contigues ou non correspondant chacune à un lot de corps F. Entre deux lots successifs de corps F à traiter, on laisse la suspension de produit SP au repos (ou on la mélange).

Sur la figure 3 sont représentés en abscisse le temps t et, en ordonnée, d'une part, la réalisation de la quantité déterminée de suspension de produit de traitement SP (courbe III inférieure) et, d'autre part, les dispersions successives correspondant aux lots successifs de corps F à traiter (courbe VI supérieure). Chaque pic correspond respectivement à une opération de réalisation d'une quantité déterminée QP de suspension SP ou à une dispersion ou, plus exactement, à un lot de corps F. La quantité QP de suspension SP réalisée aux instants R1, R2 et R3 correspond à des quantités constantes ou sensiblement constantes QF des corps à traiter et donc à des nombres n1, n2 et n3 égaux ou voisins de lots (ceux-ci étant normalement égaux ou comparables). Les durées $\Delta t1$, $\Delta t2$ et $\Delta t3$ nécessaires à la dispersion de la suspension SP préparée en R1, R2 et R3 peuvent être variables mais restent néanmoins limitées (par exemple à la journée), afin d'éviter toute dégradation de la suspension. Cette durée maximale de conservation dépend du produit de traitement P et de la production de corps F.

Selon l'invention (figure 4), on projète la suspension aqueuse de produit de traitement SP à partir des moyens de projection 2, de façon omni-directionnelle et en fines gouttelettes, de manière que l'atmosphère ambiante environnant les corps F à traiter soit chargée de produit de traitement P, le dépôt sur les corps F à traiter intervenant ultérieurement. Cette méthode est préférée à la projection directe de la suspension de produit de traitement SP sur les corps F à traiter qui pourraient être endommagés ou recevoir du produit de traitement P de façon très innégale.

Cette projection de la suspension SP est réalisée à partir d'une ou plusieurs zones (ponctuelles, linéaires, surfaciques) déterminées par les moyens de projection 2 -suffisamment écartées des corps F à traiter- pour éviter une projection directe et immédiate de la suspension SP. Cet écartement est par exemple compris entre 25 cm et 100 cm.

Afin que la répartition du produit de traitement P soit la plus homogène possible dans l'atmosphère ambiante entourant les corps F à traiter, on projète la suspension SP en une ou, préférentiellement, plusieurs passes par déplacement des moyens de projection 2, par rapport aux corps F à traiter (ou inversement déplacement des corps F à traiter par rapport aux moyens de projection 2). Par exemple, on réalise deux passes en sens opposés de deux zones de projection opposées l'une à l'autre placées de part et d'autre des corps F à traiter, déplacées en sens opposés l'une à l'autre. A cet effet, ces deux zones de projection sont normalement décalées l'une par rapport à l'autre, c'est-à-dire ne sont pas en regard l'une de l'autre. Cette séquence favorise la création de l'atmosphère entourant les corps F à traiter et chargée de produit de traitement P.

La suspension de produit de traitement SP est maintenue sous pression dans l'enceinte 1 dans laquelle elle est préparée. Le fluide vecteur A -notamment de l'air- utilisé pour la projection est purifié de toute impureté.

Avant, et notamment immédiatement avant, ainsi que après et notamment

immédiatement après une projection de suspension de produit de traitement SP, on projète depuis la zone de projection (les moyens de projection 2) le gaz vecteur A pendant une courte durée. Cette séquence permet essentiellement d'assurer un fonctionnement optimal des moyens de projection 2 (notamment d'éviter leur colmatage), tout en favorisant les turbulences permettant la réalisation de l'atmosphère chargée en produit de traitement P.

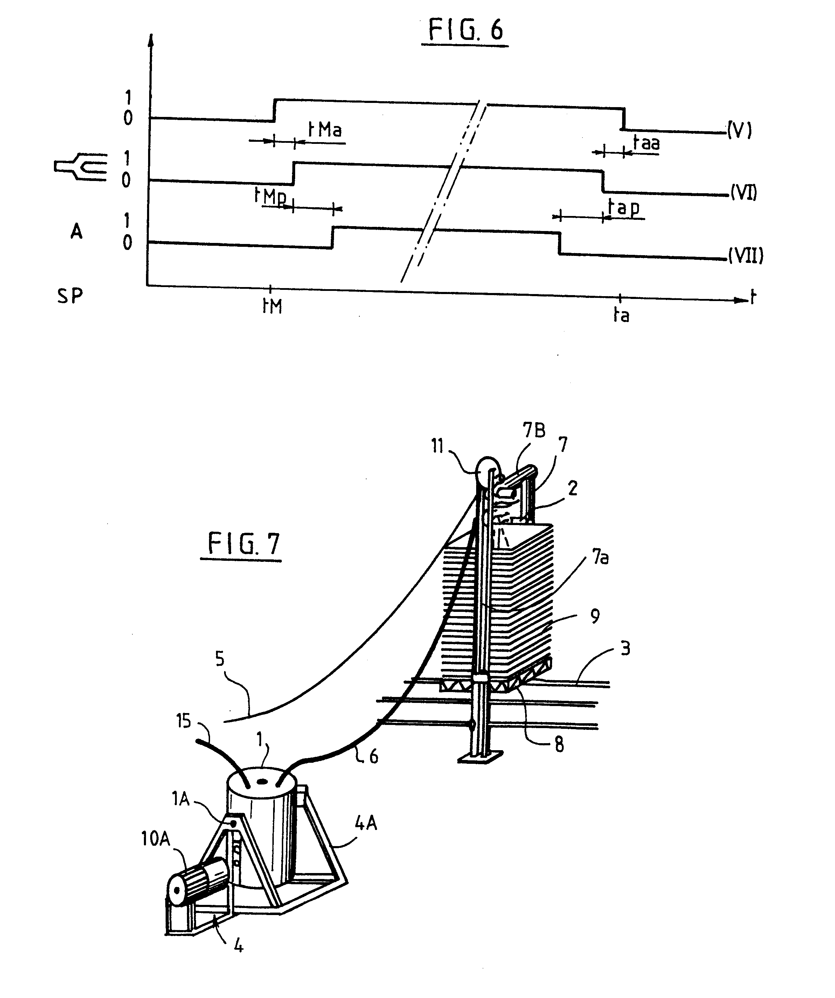

Sur la figure 6 sont représentés en abscisse le temps t et en ordonnée en premier lieu (courbeV supérieure) l'état des moyens de projection : ouvert (position 1) ou fermé (position 0) ; en deuxième lieu (courbe VI intermédiaire) la projection du fluide vecteur A : projection (position 1) ou absence de projection (position 0) ; et en troisième lieu (courbe VII inférieure) la projection de suspension de produit de traitement SP : projection (position 1) ou absence de projection (position 0). Le début de projection de fluide vecteur A intervient avec un retard TMA, après l'ouverture des moyens de projection 2 au moment TM. Le début de projection de suspension SP intervient avec un retard TMP, après le début de la projection de fluide vecteur A. Eventuellement, la projection de fluide vecteur A intervient simultanément avec l'ouverture des moyens de projection 2 (c'est-à-dire que TMA = 0). De même, la fin de la projection de fluide vecteur A précéde avec une avance TAA la fermeture des moyens de projection 2. Eventuellement, TAA = 0 si on cesse de projeter le fluide vecteur A en même temps que l'on ferme les moyens de projection 2. La projection de suspension SP précéde avec une avance TAP la fin de la projection de fluide vecteur A. Préférentiellement, les durées TMP et TAP sont faibles, de l'ordre de la seconde ou même tendant vers zéro.

Selon l'invention, on range les corps F à traiter en piles FF constituant chacune un lot, chaque étage de la pile comportant un ou une puralité de corps F à traiter. Préférentiellement, sur chaque étage, les corps F à traiter sont placés en quinconce et ils sont décalés d'un étage à l'autre. Cette disposition permet de traiter une quantité appréciable de corps avec un nombre de projections limité. Elle est particulièrement bien adaptée au dépôt au moyen d'une atmosphère chargée de produit de traitement P comme c'est le cas dans l'invention.

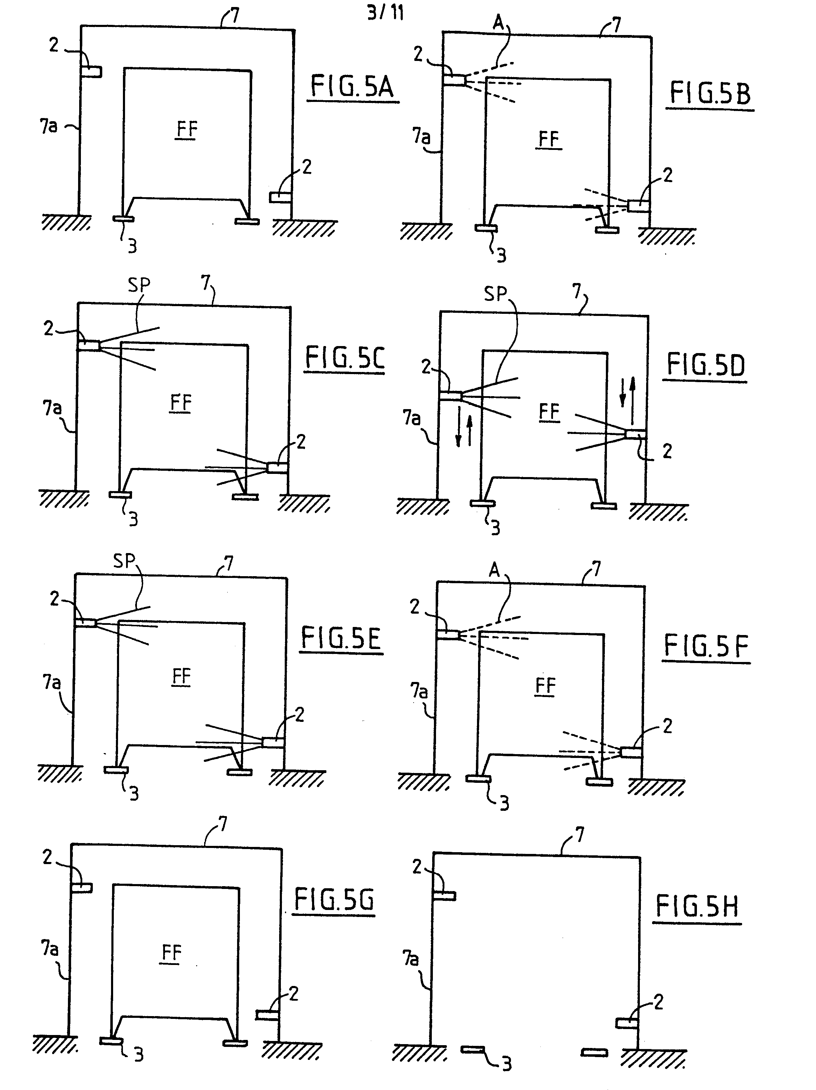

On se réfère maintenant aux figures 5A à 5H qui illustrent les étapes successives de la dispersion de la suspension SP, dans l'atmosphère ambiante entourant une pile FF de corps F à traiter, grâce à un ou deux ensembles de moyens de projection 2 (respectivement gauche et droite) de part et d'autre de la pile FF. Au départ, les moyens de projection gauche et droite sont respectivement situés en haut et en bas de la pile (figure 5A). Puis on ouvre les moyens de projection 2 gauche et droite comme il a été expliqué précédemment et on projète le fluide vecteur A (représenté en tiretés), les moyens de projection restant au repos (figure 5B). Puis on projète la suspension aqueuse de produit de traitement (représentée en traits pleins) (figure 5C), les moyens de projection 2 étant alors déplacés dans un sens puis dans l'autre (par exemple les moyens de projection gauche déplacés d'abord vers le bas puis vers le haut et les moyens de projection à droite déplacés d'abord vers le haut puis vers le bas) (figure 5D).

On ramène les moyens de projection 2 à leur position initiale (figure 5E). On cesse de projeter la suspension SP, puis on projète le fluide vecteur A (figure 5F). On cesse la projection de fluide vecteur A et on ferme les moyens de projection 2 (figure 5G). La pile FF peut alors être évacuée et le cycle peut recommencer avec une autre pile FF à traiter.

Selon l'invention, on mélange la suspension aqueuse de produit de traitement par balancement de l'enceinte étanche 1 dans un sens puis dans l'autre autour d'un axe horizontal (1A). L'amplitude du balancement est comprise par exemple entre 30 et 100 degrés et préférentiellement est de l'ordre de 60 degrés. La fréquence du balancement est comprise par exemple entre 2 et 15 balancements par minute. L'axe 1A traverse préférentiellement l'enceinte 1. Ce type de mélange permet, d'une part d'éviter de devoir ouvrir ou pénétrer dans l'enceinte 1 et, d'autre part d'assurer une homogénéité satisfaisante de la suspension SP, celle-ci étant remuée à la manière de la houle.

L'invention concerne également les corps F obtenus par la mise en oeuvre du procédé. Ces corps sont notamment des produits alimentaires par exemple des fromages ou de la charcuterie ayant reçu des souches de flore fongique.

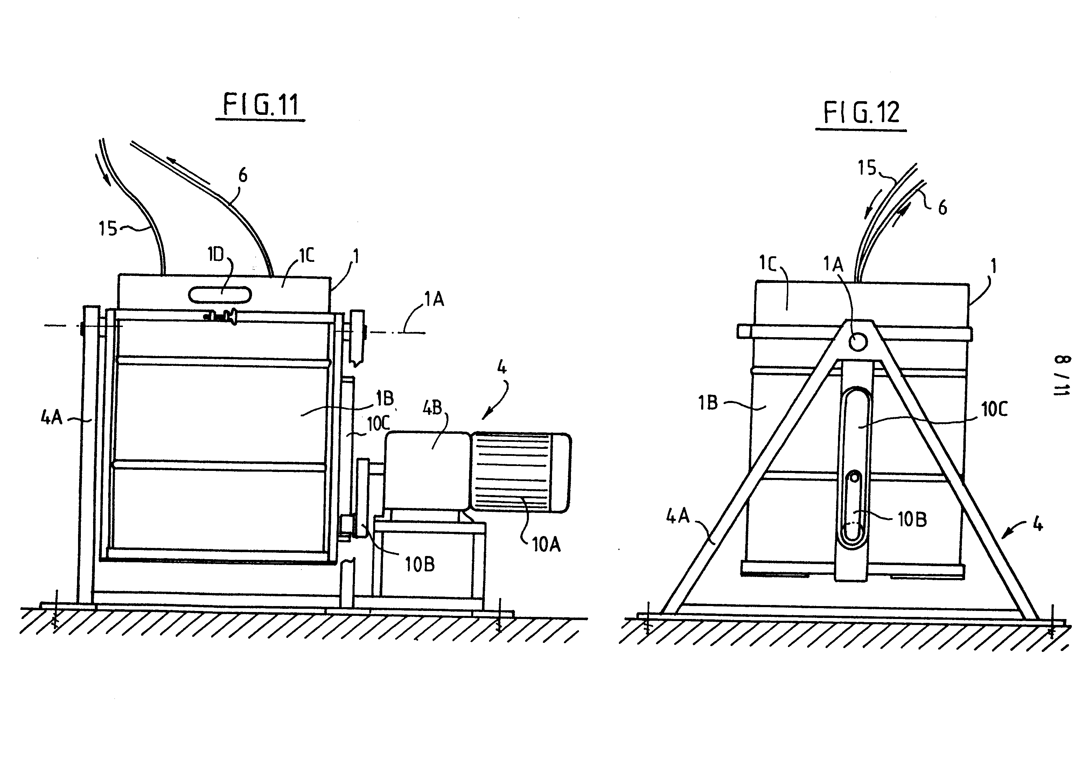

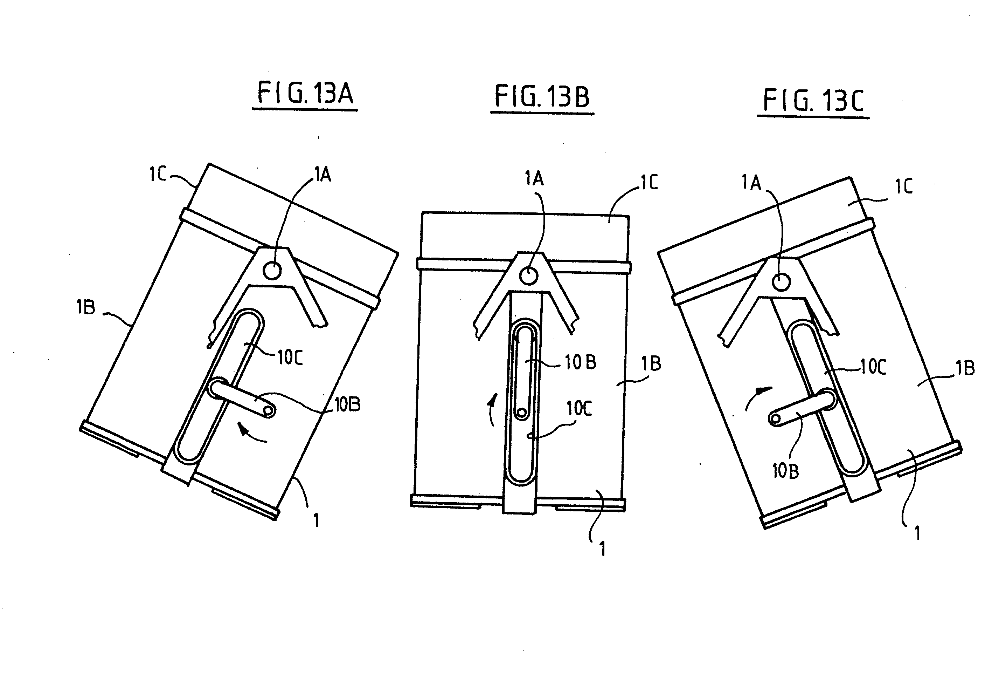

L'invention concerne enfin une machine qui comporte (figure 7) essentiellement deux ensembles : le premier en stockage et de mélange de la suspension SP, comprenant l'enceinte 1 (figure 11 à 13) et le second de réception des corps F à traiter et de pulvérisation de la suspension SP comprenant les moyens de projection 2. Ces deux ensembles peuvent être distincts ou non ou plus ou moins imbriqués l'un dans l'autre. La machine comporte, outre l'enceinte 1 et les moyens de projection 2, des moyens 3 de réception des corps F ou des piles FF ; des moyens 4 pour mélanger la suspension SP se trouvant dans l'enceinte 1, associés à l'enceinte 1 ; des moyens d'amenée 5 de fluide vecteur A associés aux moyens de projection 2 et à l'enceinte 1.

Le second ensemble comporte un bâti vertical en forme de U renversé 7 enjambant les moyens de réception 3 et placés transversalement par rapport à ceux-ci. Le bâti 7 comporte par exemple deux montants verticaux 7A et une traverse supérieure horizontale 7B.

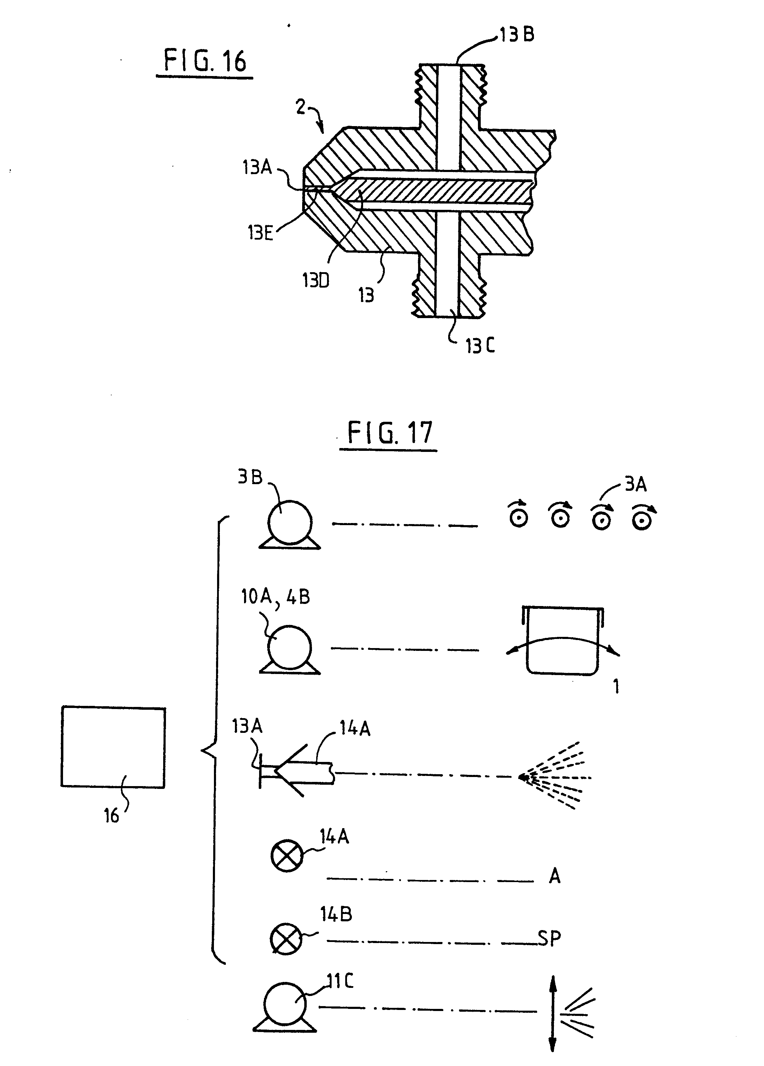

Les moyens de réception 3 sont constitués par exemple par un convoyeur à rouleaux 3A commandé par un moto-réducteur 3B (figure 17). Le convoyeur à rouleaux 3A peut recevoir une palette 8 sur laquelle sont empilées des claies 9 recevant les corps F à traiter et formant la pile FF. D'autres formes de réalisations sont possibles. Les moyens de réception 3 constituent également des moyens d'amenée et d'évacuation de la pile FF.

L'enceinte 1 est par exemple un bidon 1B en acier inoxydable ayant un couvercle 1C pouvant être maintenu de façon rigide mais amovible au bidon 1B de façon étanche, grâce à des moyens d'étanchéité prévus à cet effet. Le bidon 1B peut comporter des poignées 1D pour la manutention de l'enceinte 1. Cette enceinte 1 est donc préférentiellement amovible de manière à pouvoir être déplacée lors de la réalisation de la dispersion. En particulier, l'enceinte 1 peut être amenée en dehors de la zone de production même (par exemple le laboratoire) pour être remplie.

Les moyens de mélange 4 comprennent des moyens de maintien 4A de l'enceinte 1 à pivotement autour de l'axe horizontal 1A et des moyens 4B pour faire balancer l'enceinte 1 autour de son axe 11 de part et d'autre d'une position médiane. L'axe 1A est placé en partie haute de l'enceinte 1, de sorte que la position médiane est la position normale de repos verticale.

Les moyens de maintien 4A se présentent par exemple sous la forme d'un bâti formant piètement et reposant au sol, comportant deux flasques face à face entre lesquels est montée suspendue l'enceinte 1 par l'axe 1A.

Les moyens 4B pour faire balancer sont par exemple des moyens mécaniques portés par les moyens de maintien 4A et comprenant un moto-réducteur 10A, et un système de bielle-manivelle 10B monté d'une part sur l'axe du moto-réducteur 10A et, d'autre part, sur un coulisseau 10C fixé à la face latérale du bidon 1B orthogonalement à l'axe 1A. Ce système à bielle-manivelle 10B peut être réglé en amplitude et en vitesse, si nécessaire, de manière à régler l'amplitude et la fréquence du balancement de l'enceinte 1.

Les moyens de projection 2 sont constitués par une ou plusieurs buses à laquelle sont associés des moyens de commande 2A. Les moyens de projection 2 sont portés par des moyens de supports de buse 2B montés mobiles sur le bâti 7, notamment à coulissement vertical le long des montants 7A grâce à des moyens d'entraînement II.

Préférentiellement, les moyens de projection 2 des deux montants 7A sont montés à coulissement dans des directions opposées l'une à l'autre et au repos ils sont placés respectivement en haut et en bas des montants 7a.

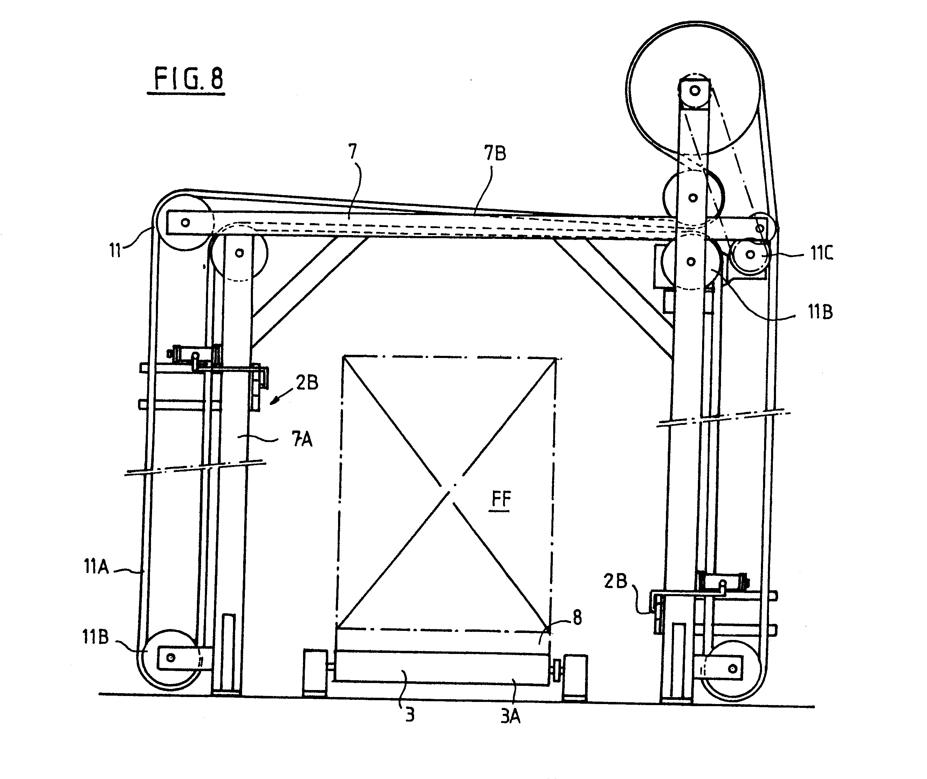

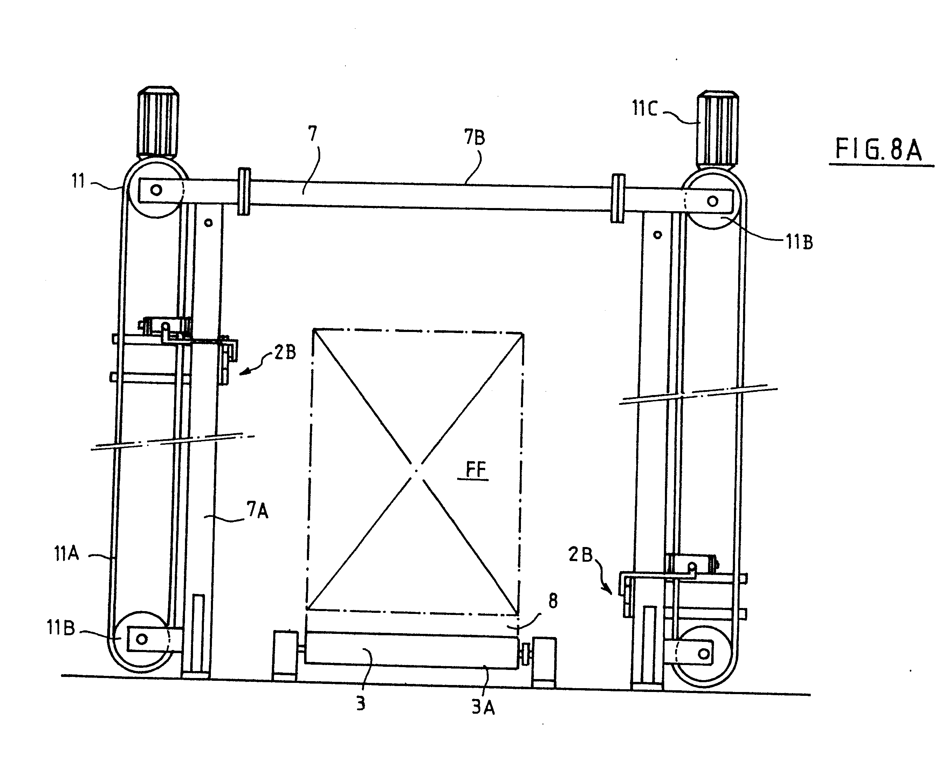

Les moyens d'entraînement 11 peuvent comporter une ou plusieurs chaines ou courroies sans fin ou cables 11A, fixées aux moyens supports de buses 2B, portées par des poulies, roues à gorge, pignons ou similaires 11B placées en partie haute et en partie basse du bâti 7 et entraînées par un ou deux moto-réducteurs 11C, par exemple, porté par une console fixée à l'un des montants 7A (figures 8 et 8A). Ainsi, les moyens de projection 2 d'un côté et de l'autre se déplacent simultanément et en synchronisme.

Les moyens supports de buse 2B sont constitués par exemple par une pièce formant, d'une part platine 12A à laquelle sont fixées perpendiculairement les buses 2 et, d'autre part coulisseau 12B guidé par les montants 7A agencés pour former moyens de guidage. Préférentiellement, plusieurs (par exemple 2 ou 3) buses 2 sont montées sur la platine 12A, ces buses étant écartées les unes des autres en sens horizontal, l'écartement extrême correspondant à la largeur d'une pile FF ou à une partie de celle-ci (cette dernière solution est préférable). Les buses 2 sont préférentiellement omnidirectionnelles, l'angle d'ouverture du cône de projection étant par exemple de l'ordre de 40°.

Une buse (figure 16) comprend par exemple un corps de buse 13 fixé à la platine 12A, comportant un orifice de pulvérisation 13A agencé pour une pulvérisation omni-directionnelle comme indiqué précédemment, un orifice d'entrée 13B de fluide vecteur, un orifice d'entrée 13C de suspension liquide SP de produit de traitement, respectivement branchés sur les moyens d'amenée 5 en fluide vecteur A et les moyens d'amenée 6 de la suspension SP, et enfin un clapet 13D fermant l'orifice 13A. Un organe de commande 14A et des vannes 14B et 14C, par exemple pneumatiques, assurent respectivemnt le déplacement du clapet 13D et des orifices 13B et 13C, et constituent les moyens de commande 2A.

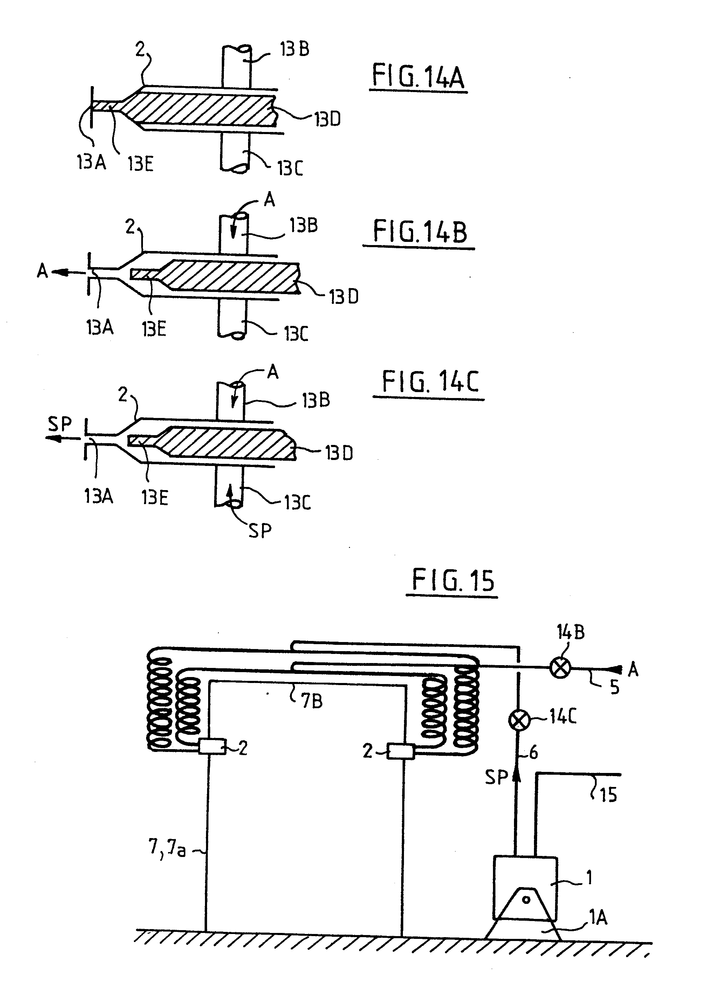

On se réfère maintenant à la figure 15 qui illustre les circuits de fluides. A l'enceinte 1 est associé un conduit d'amenée de gaz sous pression 15 qui permet le maintien en pression et de façon étanche de l'enceinte 1. Un conduit d'amenée 6 est branché sur l'enceinte 1 et sur les buses 2. Le branchement sur l'enceinte 1 est préférentiellement réalisé sur le couvercle 1c au moyen de flexibles (compte tenu du balancement de l'enceinte). Le conduit d'amenée 6 se divise en deux sous-conduits, branchés sur les buses 2, enroulés de façon hélicoïdale et placés le long des montants 7A pour pouvoir se déployer et permettre le coulissement des supports de buses 2B. Un conduit d'amenée d'air sous pression A, vecteur de la suspension SP pour la pulvérisation, est branché de la même manière sur les buses 2.

On se réfère maintenant à la figure 17 sur laquelle sont représentés les moyens de commande 16 de la machine. Ces moyens de commande, par exemple constitués par un automate programmable, placés dans une armoire de commande et pourvus des boutons, manettes, voyants, etc... nécessaires, agissent sur les organes suivants : le moto-réducteur 3B des moyens d'amenée 3, le moto-réducteur 10A des moyens de mélange 4, le moto-réducteur 11C des moyens d'entrainement 11 des buses 2, les moyens de commande 2A des buses 2 qui comprennent eux-mêmes l'organe de commande 14A et les vannes 14B et 14C. Ces moyens de commande peuvent naturellement comporter les moyens de réglage, de température, de contrôle.

Le fonctionnement de la machine est le suivant : les corps F à traiter sont rangés sur des claies 9 empilées sur une palette 8 pour former une pile FF ; le moto-réducteur 3B est actionné pour amener la pile FF dans l'ouverture du bâti 7. Le moto-réducteur 3B est stoppé pour que la pile FF reste immobile ; le moto-réducteur 10A est actionné pour que les moyens de mélange 4 soient actifs et la suspension SP rendue homogène. Les moyens de commande 2A sont également actionnés pour permettre la pulvérisation et le moto-réducteur 11C actionné pour déplacer les moyens de projection 2. La projection terminée, on cesse d'actionner le moto-réducteur 11C, les moyens de commande 2A, le moto-réducteur 10A tandis que le moto-réducteur 3B est actionné pour avancer la pile FF traitée et permettre l'amenée d'une autre pile. S'agissant de la projection de la suspension SP proprement dite, elle est réalisée de la manière suivante : l'organe de commande 14A permet l'ouverture de l'orifice 13A. Puis les vannes 14B et 14C sont ouvertes successivement pour permettre la projection, d'abord du fluide vecteur A, puis ensuite de la suspension SP. Simultanément, le moto- réducteur 11C est activé. A la fin de la projection, les vannes 14C et 14B sont fermées successivement, ce qui arrête la projection de la suspension SP puis du fluide vecteur A. Puis, l'organe de commande 14A est activé pour fermer l'orifice 13A.

Selon une variante possible, la machine comporte des moyens de nettoyage permanent, non représentés, ayant pour fonction de nettoyer les organes de la machine les plus exposés à la projection de la suspension SP et notamment les moyens de projection 2, le bâti 7 et les moyens d'entrainement 11.

La machine peut faire l'objet de nombreuses variantes : l'enceinte 1 peut avoir d'autres formes, d'autres modes de remplissage qu'un couvercle amovible ; les moyens de mélange 4 peuvent être également réalisés différemment, bien que le balancement précédemment décrit soit la réalisation préférentielle ; les moyens de projection 2 peuvent aussi faire l'objet de formes de réalisation différentes, en particulier ils peuvent être associés à des moyens tels qu'une caisson confinant l'atmosphère.

Ainsi que cela résulte des caractéristiques décrites précédemment.le procédé et la machine permettent d'assurer une bonne stérilité/ C'est ainsi que, notamment, l'enceinte 1 de quantité suffisante est remplie de solution aqueuse S et de produit de traitement P, pour former la suspension SP, en dehors de la zone de traitement des corps F.

REVENDICATIONS

1) Procédé de traitement de surface d'au moins un corps solide, en particulier d'une part pour déposer un produit solide finement divisé en suspension aqueuse, par exemple pour un traitement en vue de la fabrication, la désinfection ou autre, le produit solide finement divisé pouvant être notamment, du penicillium et, d'autre part, le corps solide étant un produit alimentaire, notamment un fromage ou de la charcuterie, caractérisé par le fait qu'on disperse d'abord dans une quantité de solution aqueuse (S) appropriée au traitement d'une certaine quantité (QF) de corps (F) à traiter, la dose de produit de traitement (P) nécessaire à l'obtention de la concentration recherchée ; puis, on stocke la quantité (QP) de suspension aqueuse de produit de traitement (SP) ainsi réalisé dans une enceinte étanche (1) ; on mélange la suspension (SP) au moins au début de la phase de soutirage au cours de laquelle on dépose le produit de traitement (P) sur les corps (F) à traiter.

2) Procédé selon la revendication 1 caractérisé en ce qu'on dépose le produit de traitement (P) sur les corps (F) à traiter par dispersion dans l'atmosphère entourant les corps (F) à traiter, notamment grâce à une projection.

3) Procédé selon les revendications 1 et 2 caractérisé en ce qu'on dépose le produit de traitement (P) sur les corps (F) à traiter en plusieurs étapes correspondant chacune à un lot de corps (F) à traiter.

4) Procédé selon les revendications 1 à 3 caractérisé en ce qu'on projette la suspension (SP) de produit de traitement à partir d'une ou plusieurs zones, notamment opposées l'une de l'autre, placées de part et d'autre des corps (F) à traiter.

5) Procédé selon les revendications 1 à 4 caractérisé en ce qu'on projette la suspension (SP) de produit de traitement en une ou plusieurs passes, notamment en sens opposés.

6) Procédé selon les revendications 1 à 5 caractérisé par le fait qu'avant et/ou après, et notamment immédiatement avant et/ou immédiatement après une projection de suspension (SP), on projette un gaz vecteur (A).

7) Procédé selon les revendications 1 à 6 caractérisé en ce qu'on range les corps (F) à traiter en piles et notamment on place sur chaque étage de chaque pile les corps (F) en quinconce et on les décale d'un étage à l'autre.

8) Procédé selon les revendications 1 à 8 caractérisé en ce qu'on mélange la suspension (SP) par balancement de l'enceinte (1) dans un sens puis dans l'autre autour d'un axe horizontal (1A), et notamment un balancement d'amplitude comprise entre environ 30 degrés et 100 degrés et de fréquence comprise entre environ 2 et 15 balancements par minute.

9) Procédé selon la revendication 1 à 8 caractérisé en ce qu'on réalise la dispersion en dehors de la zone de production.

10) Corps solide -notamment produit alimentaire tel que du fromage ou de la charcuterie- sur lequel est déposé un produit solide finement divisé en suspension aqueuse, caractérisé par le fait que le dépôt est réalisé par le procédé selon l'une quelconque des revendications 1 à 9.

11) Machine pour déposer un produit solide finement divisé en suspension aqueuse -notamment des souches de flore fongique telles que du pénicillium- sur un ou des corps solides à traiter -notamment un produit alimentaire tel que du fromage ou de la charcuterie- caractérisée en ce qu'elle comporte des moyens (3) de réception des corps (F) à traiter; une enceinte (1) étanche, destinée à recevoir la quantité déterminée (QP) de suspension aqueuse de produit de traitement (SP); des moyens 2 pour réaliser autour des corps (F) à traiter une atmosphère chargée de produit de traitement (P); et des moyens (4) pour mélanger la suspension (SP) se trouvant dans l'enceinte (1).

12) Machine selon la revendication 11 caractérisé en ce que les moyens (4) pour mélanger la suspension (SP) sont des moyens de balancement de l'enceinte (1), autour d'un axe (1A) et comportant notamment des moyens de maintien (4A) de l'enceinte (1) et des moyens (4B) pour la faire balancer autour de son axe (1A), lesdits moyens (4B) pouvant comprendre un moto-réducteur (10A), porté par les moyens de maintien (4A), un système bielle-manivelle (10B) associé au moto-réducteur (10A) et à un coulisseau (10C) de l'enceinte (1).

13) Machine selon l'une quelconque des revendications 11 et 12 caractérisée en ce que les moyens (2), pour réaliser autour des corps (F) à traiter une atmosphère chargée de produits de traitement (P), comprennent au moins une buse (2) à laquelle sont associés des moyens d'amenée (5) en fluide vecteur (A) et des moyens d'amenée (6) en suspension (SP), eux-mêmes branchés sur l'enceinte (1).

14) Machine selon l'une quelconque des revendications 11 à 13 caractérisée en ce qu'elle comporte des buses (2) associées à deux montants (7A), ces buses étant déplacées simultanément en synchronisme et en sens opposés par des moyens d'entraînement (11), les buses (2) au départ étant situées notamment d'un côté en haut des montants (7C) et de l'autre côté en bas.

15) Machine selon l'une quelconque des revendications 11 à 13 caractérisée en ce qu'elle comporte des moyens (2B) support de buse comportant une platine (12A) sur laquelle sont fixées une ou plusieurs buses (2) et un coulisseau (12B) guidé par les montants (7A) formant guide et auquel est associée la courroie (11A) des moyens d'entraînement (11).

16) Machine selon l'une quelconque des revendications 11 à 14 caractérisée en ce qu'une buse (2) comporte un corps de buse (13) ayant une ouverture de pulvérisation (13A), une entrée (13B) de fluide vecteur (A), une entrée (13C) de suspension (SP), un clapet (13D) pouvant fermer l'ouverture (13A) et une aiguille (13E) empêchant le colmatage de l'ouverture (13A).

4

17) Machine selon l'une quelconque des revendications 11 à 16 caractérisée en ce qu'elle comporte des moyens de commande (2A) associés aux moyens de projection (2), un organe de commande (14A) et deux vannes (14B), (14C) associées respectivement au clapet (13D) et aux entrées (13B) et (13C) ou aux moyens d'amenée respectifs (5, 6).

18) Machine selon l'une quelconque des revendications 11 à 17 caractérisée en ce que l'enceinte (1) est d'une part sous pression et, à cet effet, il lui est associé des moyens d'amenée (15) de gaz sous pression et d'autre part, amovible de manière à pouvoir être déplacée lors de la réalisation de la dispersion.

FIG. 1

FIG. 2

$t_1$ $t_2$ $t_3$ $t_4$

(II)

(I)

A          B          C          D

FIG. 3

(IV)

N1          N2          N3

(III)

R1    ΔT1    R2    ΔT2    R3    ΔT3

FIG. 4

F

2

SP

9

2/11

0219405

FIG.5A

FIG.5B

FIG.5C

FIG.5D

FIG.5E

FIG.5F

FIG.5G

FIG.5H

## FIG. 6

## FIG. 7

FIG.8

FIG.8A

FIG.9

FIG. 10

0219405

## FIG.11

## FIG.12

0219405

FIG. 13A          FIG. 13B          FIG. 13C

9/11

0219405

FIG. 14A

FIG. 14B

FIG. 14C

FIG. 15

FIG. 16

FIG. 17

**Office européen des brevets**

**RAPPORT DE RECHERCHE EUROPEENNE**

Numero de la demande

EP 86 40 2099

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 447 682 (GROUPE BONGRAIN) <br> * Page 1, lignes 19-24 * | 1,2,10 | A 01 J 27/02 <br> A 01 J 25/16 <br> A 23 C 19/068 <br> B 05 B 13/04 <br> B 01 F 11/00 |
| | --- | | |
| A | DE-C- 863 147 (L. KREHS) <br> * Page 1, lignes 17-27; figures 1,2 * | 3-7 | |
| | --- | | |
| A | US-A-2 797 902 (S.B. BEUGLER) <br><br> * Figures 1,2 * | 8,9,12,18 | |
| Y | | 11 | |
| | --- | | |
| Y | DE-B-1 052 154 (HERMANN WALDNER KG) <br> * Revendication 1; figures 1-4 * | 11 | DOMAINES TECHNIQUES RECHERCHES (Int. Cl.4) |
| A | | 13 | A 01 J <br> B 05 B <br> A 23 C <br> A 23 L <br> B 01 F <br> B 05 D |
| | --- | | |
| A | FR-A-1 312 683 (VEB MATHIAS-THESEN-WERFT WISMAR) <br> * Figure 2 * | 14,15 | |
| | --- | | |
| A | DE-A-2 037 879 (K. GASBJERG) | | |
| | ----- | | |

Le présent rapport de recherche a été établi pour toutes les revendications

| Lieu de la recherche | Date d'achèvement de la recherche | Examinateur |
|---|---|---|
| LA HAYE | 27-11-1986 | NEHRDICH H.J |